# EUROPEAN PATENT APPLICATION

(11) **EP 4 131 035 A1**
(43) Date of publication of application: **08.02.2023**
(21) Application number: 21781837.6
(22) Date of filing: 10.03.2021
(51) Int. Cl.: G06F 21/32

(54) **AUTHENTICATION MANAGEMENT DEVICE, AUTHENTICATION MANAGEMENT METHOD, AND RECORDING MEDIUM**

(30) Priority: 30.03.2020 JP 2020061055
(71) Applicant: NEC Corporation, 108-8001 Tokyo (JP)
(72) Inventor: LOU, Fengqian, Tokyo 108-8001 (JP); SHIMIZU, Yuki, Tokyo 108-8001 (JP)
(74) Representative: Betten & Resch
(86) International application number: PCT/JP2021/009536
(87) International publication number: WO 2021/199991

(57) **Abstract**

A captured image showing a face of an authentication target from an image capturing device is acquired. Management is performed in which a plurality of different authentications are continuously performed based on a comparison between: a feature of the face and a feature of a motion that are shown in the captured image; and pre-stored features of faces of a plurality of persons and features of motions thereof.

## Description

### TECHNICAL FIELD

The present invention relates to an authentication management device, an authentication management method, and a recording medium.

### BACKGROUND ART

There is a technique for performing authentication that uses user's motion when performing user authentication. For example, in Patent Document 1 it is disclosed that a user is asked to perform a preliminarily assigned specific motion and this motion is detected and determined to thereby perform authentication. Also, in Patent Document 2, there is disclosed a technique in which user information is input, and face feature information concerning the user information, and motion information are used to perform authentication.

### Prior Art Documents

### Patent Documents

Patent Document 1: Japanese Unexamined Patent Application, First Publication No. 2007-233602
Patent Document 2: Japanese Unexamined Patent Application, First Publication No. 2007-156768

### SUMMARY OF THE INVENTION

### Problems to be Solved by the Invention

There is a demand for a technique for performing highly convenient authentication using a plurality of elements without the need for inputting specific information for specifying a user, such as user ID (identifier) and password.

An example object of the present invention is to provide an authentication management device, an authentication management method, and a recording medium capable of solving the above problem.

### Means for Solving the Problem

According to a first example aspect of the present invention, an authentication management device includes: an image acquisition means for acquiring a captured image showing a face of an authentication target from an image capturing device; and
an authentication management means for performing management in which a plurality of different authentications are continuously performed based on a comparison between: a feature of the face and a feature of a motion that are shown in the captured image; and pre-stored features of faces of a plurality of persons and features of motions thereof.

According to a second example aspect of the present invention, an authentication management method includes: acquiring a captured image showing a face of an authentication target from an image capturing device; and performing management in which a plurality of different authentications are continuously performed based on a comparison between: a feature of the face and a feature of a motion that are shown in the captured image; and pre-stored features of faces of a plurality of persons and features of motions thereof.

According to a third example aspect of the present invention, a recording medium has stored therein a program that causes a computer of an authentication management device to execute: acquiring a captured image showing a face of an authentication target from an image capturing device; and performing management in which a plurality of different authentications are continuously performed based on a comparison between: a feature of the face and a feature of a motion that are shown in the captured image; and pre-stored features of faces of a plurality of persons and features of motions thereof.

### Effect of the Invention

According to an example embodiment of the invention, it is possible to perform highly convenient authentication using a plurality of elements, without requiring input of specific information for specifying a user such as user ID and password.

### BRIEF DESCRIPTION OF THE DRAWINGS

FIG. 1 is a diagram showing an authentication system according to an example embodiment of the present invention.
FIG. 2 is a hardware configuration diagram of an authentication management device according to an example embodiment of the present invention.
FIG. 3 is a first diagram showing function blocks of the authentication management device and an edge device according to an example embodiment of the present invention.
FIG. 4 is a first diagram showing a processing flow of the authentication management device according to an example embodiment of the present invention.
FIG. 5 is a first diagram showing a registration status of a face database and a motion database according to an example embodiment of the present invention.
FIG. 6 is a second diagram showing a processing flow of the authentication management device according to an example embodiment of the present invention.
FIG. 7 is a second diagram showing function blocks of an authentication management device and an edge device according to an example embodiment of the present invention.
FIG. 8 is a second diagram showing a registration status of a face database and a motion database according to an example embodiment of the present invention.
FIG. 9 is a third diagram showing function blocks of the authentication management device and the edge device according to an example embodiment of the present invention.
FIG. 10 is a third diagram showing a registration status of a face database and a motion database according to an example embodiment of the present invention.
FIG. 11 is a diagram showing an example of a configuration of the authentication management device according to an example embodiment of the present invention.
FIG. 12 is a diagram showing a processing flow of the authentication management device shown in FIG. 11.

### EMBODIMENTS FOR CARRYING OUT THE INVENTION

Hereinafter, an authentication management device according to an example embodiment of the present invention will be described, with reference to the drawings.

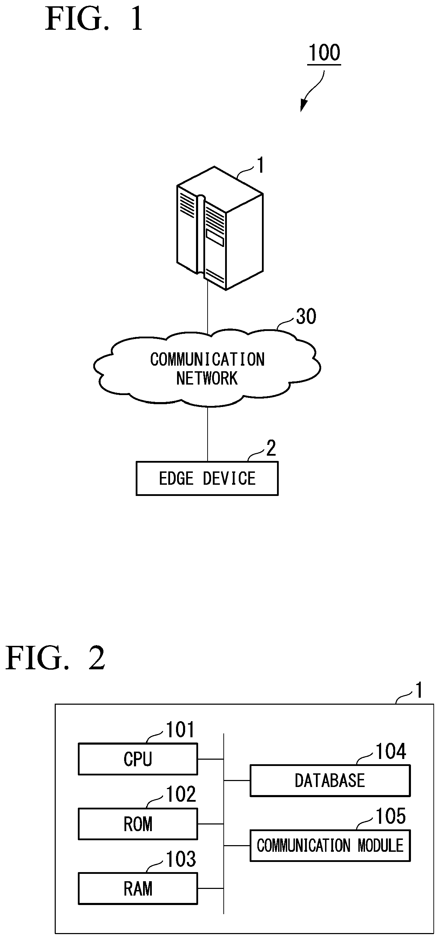

FIG. 1 is a diagram showing an authentication system including the authentication management device according to the present example embodiment.

As shown in FIG. 1, an authentication system 100 is of a configuration in which an authentication management device 1 and an edge device 2 are connected via a communication network 30. In the present example embodiment, the authentication management device 1 performs a plurality of pieces of element authentication without acquiring specific information such as user ID and password for uniquely specifying a user. More specifically, the authentication management device 1 of the present example embodiment performs 1-to-N user authentication using two elements, face feature and motion feature, without acquiring user specific information such as user ID and password.

1-to-N authentication is a technique for performing authentication in which templates including specific information and feature information of a number of users including an acquisition target user and a number of other users are acquired from a database during the authentication process. In contrast, 1-to-1 authentication is a technique for performing authentication in which a template including specific information and feature information of an acquisition target user only is acquired from a database during the authentication process. The authentication management device 1 of the present example embodiment uses face feature information and motion feature information included in templates of a number of users to perform 1-to-N authentication.

FIG. 2 is a diagram showing a hardware configuration of the authentication management device.

As shown in FIG. 2, the authentication management device 1 is a computer that includes hardware components such as a CPU (Central Processing Unit) 101, a ROM (Read Only Memory) 102, a RAM (Random Access Memory) 103, a database 104, and a communication module 105. The edge device 2 is also a computer that includes hardware components similar to those of the authentication management device 1.

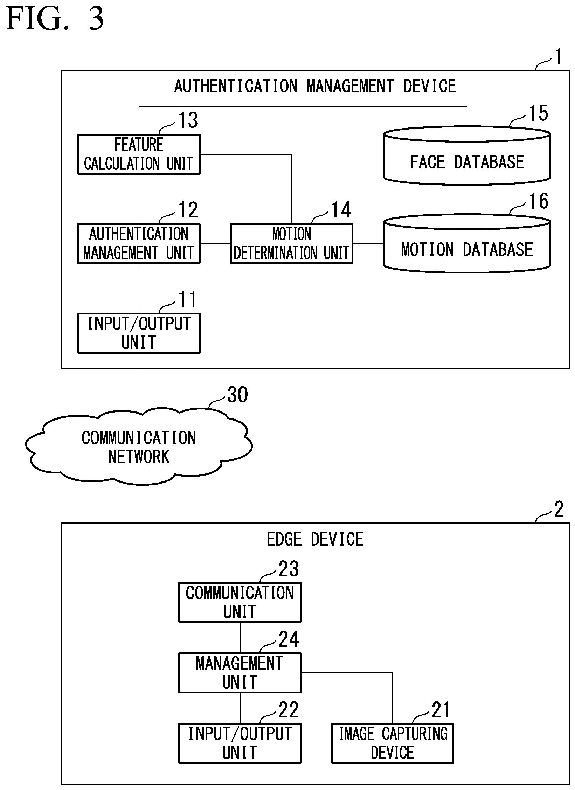

FIG. 3 is a first diagram showing function blocks of the authentication management device and the edge device.

The authentication management device 1 executes an authentication management program. As a result, the authentication management device 1 exerts functions of an input/output unit 11, an authentication management unit 12, a feature calculation unit 13, and a motion determination unit 14. Moreover, the authentication management device 1 has storage means for a face database 15 and a motion database 16 configured in the database 104.

The face database 15 stores relationships between user IDs and face feature information. The motion database 16 stores relationships between user IDs and face motion information.

The edge device 2 is defined as a device that a user directly faces when used. Specifically, the edge device 2 may be a mobile terminal, an ATM (Automated Teller Machine), or the like. The edge device 2 includes an image capturing device 21 that captures user's face and generates a captured image. The image capturing device 21 is an example of a biometric information reading means. The edge device 2 includes at least an input unit 22 that acquires input information of other users, a communication unit 23 that communicates with the authentication management device 1, and a management unit 24 that manages interface information with the user.

### <First Example Embodiment>

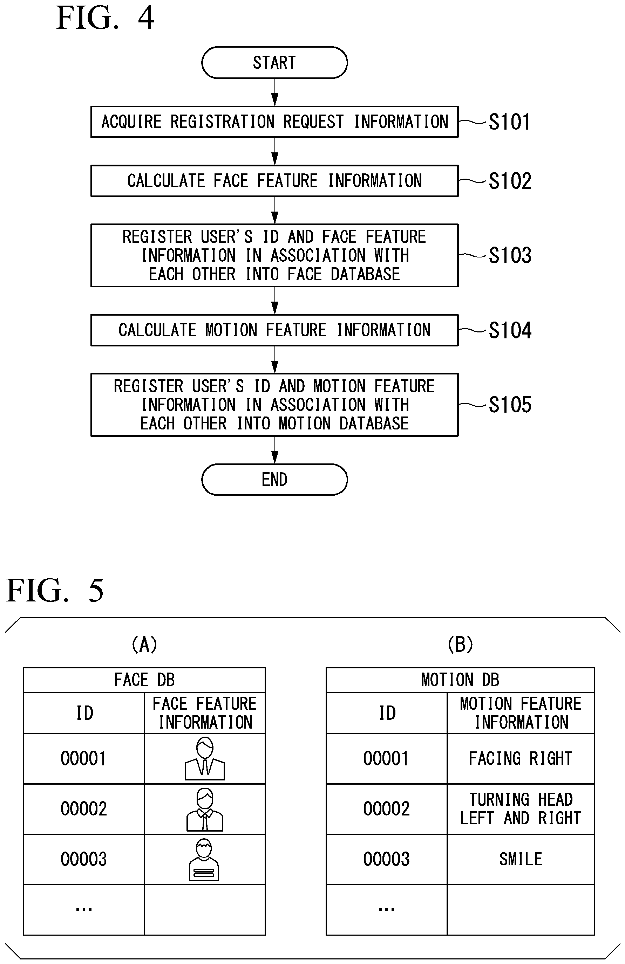

FIG. 4 is a first diagram showing a processing flow of the authentication management device.

Hereinafter, a process performed in the authentication management device at the time of biometric information registration will be described.

At the time of registration, the user uses the edge device 2 to register a face image and motion information, which are examples of biometric information, in the authentication management device 1. At this time, the user instructs the edge device 2 to initiate the registration process. In response, the edge device 2 activates the image capturing device 21. The user moves so that their face is included in an image capturing range of the image capturing device 21. At this time, the user adds a motion to their face. As the motion, for example, the user performs a motion such as facing right, facing left, tilting face, or opening mouth.

The number of motions a user is allowed to register in the authentication management device 1 may be defined preliminarily. For example, the edge device 2 may instruct the user by outputting, via an output device such as display included in the device itself, information that instructs the user to face forward during the first one second and perform a motion during the next one second. In such a case, the user faces the lens of the image capturing device 21 during the first one second and turns their face to the right during the next one second. The edge device 2 generates a frontal captured image during the first one second on the basis of the user's motion, and generates a captured image of the user facing right during the next one second. The edge device 2 then generates registration request information including at least these two captured images, and transmits it to the authentication management device 1. The captured image may be two or more of several captured images, or image information indicating a moving image.

Alternatively, the edge device 2 may output, via an output device, information that instructs the user to face forward during the first one second and perform a first motion during the next one second, and output, via the output device, information that instructs the user to further perform a second motion during the subsequent one second. In such a case, the user faces the lens of the image capturing device 21 during the first one second, turns their face to the right during the next one second, and faces forward and closes right eye during the next one second. In such a case, the edge device 2 generates registration request information including a frontal captured image of the user, a captured image of the user facing right, and a captured image of the user facing forward with right eye closed, and transmits it to the authentication management device 1.

A flag indicating face information or motion information and associated with the captured image may be assigned to the registration request information. Alternatively, a registration request may include face information or image capturing order information for identifying motion information in association with a captured image. The authentication management device 1 may detect a captured image that captured a face from the front and a captured image captured at the time of the user adding a motion, on the basis of the flag indicating motion information and the image capturing order information for identifying motion information.

The input/output unit 11 of the authentication management device 1 acquires registration request information (Step S 101). The input/output unit 11 outputs to the authentication management unit 12, the plurality of captured images included in the registration request information to the authentication management unit 12. The authentication management unit 12 acquires the plurality of captured images. The authentication management unit 12 specifies, among the plurality of captured images, a captured image in which the user is facing forward. The authentication management unit 12 instructs the feature calculation unit 13 to extract face feature information of the captured image.

The feature calculation unit 13 acquires the captured image in which the user is facing forward. The feature calculation unit 13 calculates face feature information at the time of the user facing forward, on the basis of the captured image (Step S101). A commonly known technique may be used to generate this feature information. The feature calculation unit 13 associates the user ID and the face feature information with each other and registers them in the face database 15 (Step S103).

Moreover, the authentication management unit 12 specifies a captured image in which the user adds a motion to their face. The authentication management unit 12 instructs the feature calculation unit 13 to extract motion feature information of the captured image. The feature calculation unit 13 acquires the captured image in which the user has added a motion to their face. The feature calculation unit 13 calculates motion feature information, on the basis of the captured image (Step S 104). The motion feature information is information that specifies the motion of the user. For example, when the face is recognized as facing the right direction on the basis of the face information of the user included in the captured image, the feature calculation unit 13 may calculate an identifier indicating the right direction as motion feature information. The feature calculation unit 13 associates the user ID and the motion feature information with each other and registers them in the motion database 16 (Step S105). The feature calculation unit 13 may register the captured image itself, in which the user has added a motion to their face, as motion feature information into the motion database 16. Through the processing described above, the biometric information registration process is completed.

FIG. 5 is a first diagram showing a registration status of the face database and the motion database.

As shown in the portion (A) of FIG. 5, the face database 15 stores user IDs and face feature information in association with each other. Also, as shown in the portion (B) of FIG. 5, the motion database 16 stores user IDs and motion feature information in association with each other.

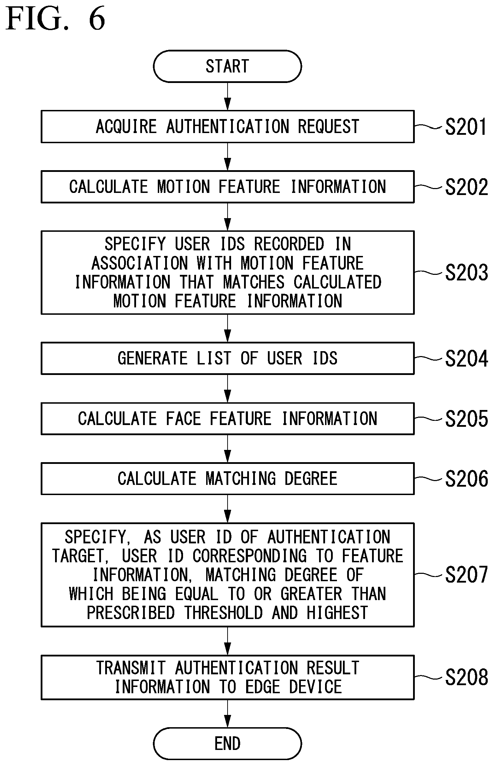

FIG. 6 is a second diagram showing a processing flow of the authentication management device.

Hereunder, the processing of the authentication management device will be described in a step-by-step manner.

When authenticating, the user operates the edge device 2 to capture their face. At this time, the user squarely faces the lens of the image capturing device 21 so that their forward-facing face is captured, and then sequentially performs motions performed at the time of registering their biometric information. The image capturing device 21 generates a captured image of the user's face captured from the front side and a captured image at the time of the user performing the motions, and outputs them to the management unit 24. The management unit 24 transmits an authentication request including the captured images to the authentication management device 1. The captured images included in the registration request may include a flag for identifying face information or motion information and image capturing order information in association with the captured images. The management unit 24 instructs the communication unit 23 to transmit the authentication request. The communication unit 23 transmits the authentication request to the authentication management device 1.

The input/output unit 11 of the authentication management device 1 acquires the received authentication request (Step S201). The input/output unit 11 outputs the authentication request to the authentication management unit 12. The authentication management unit 12 specifies a captured image indicating a motion, among the captured images included in the authentication request. The authentication management unit 12 instructs the feature calculation unit 13 to extract motion feature information on the basis of the captured image.

The feature calculation unit 13 acquires the captured image in which the user has added a motion to their face. The feature calculation unit 13 calculates motion feature information, on the basis of the captured image (Step S202). After having calculated the motion feature information, the feature calculation unit 13 outputs the feature information to the motion determination unit 14. The motion determination unit 14 specifies user IDs that are recorded in the motion database 16 in association with motion feature information matching the motion feature information calculated by the feature calculation unit 13 (Step S203). This process is an example of the motion element authentication performed by the motion determination unit 14. The motion determination unit 14 generates a list of the user IDs (Step S204). The motion determination unit 14 outputs the list to the feature calculation unit 13.

The motion feature information is information for identifying a motion. Accordingly, the amount of information (amount of data) of motion feature information is smaller than the amount of information of face feature information. Therefore, the motion determination unit 14 can specify motion feature information in the motion database 16 that matches the motion feature information calculated by the feature calculation unit 13 in a shorter period of time in comparison with a process that uses face feature information to determine whether the matching degree is greater than or equal to a threshold value and can generate a list of user IDs associated with the motion feature information.

The authentication management unit 12 specifies a captured image indicating an image of a forward-facing face, among the captured images included in the authentication request. The authentication management unit 12 instructs the feature calculation unit 13 to extract face feature information on the basis of the captured image. The feature calculation unit 13 calculates face feature information, on the basis of the captured image (Step S205). The feature calculation unit 13, on the basis of the list of user IDs acquired from the motion determination unit 14, acquires face feature information associated with those user IDs from the face database 15. The feature calculation unit 13 calculates the degree of match between the feature information of the forward-facing face calculated on the basis of the captured image and one or more pieces of face feature information acquired from the face database 15 on the basis of the list of user IDs (Step S206). The feature calculation unit 13 specifies, as the ID of the authentication target user, a user ID corresponding to the feature information with the matching degree thereof being greater than or equal to a predetermined threshold value and also the highest (Step S207). This process is an example of the face element authentication performed by the feature calculation unit 13. If a user ID with the matching degree thereof being greater than or equal to the predetermined threshold value has been specified, the feature calculation unit 13 outputs authentication result information indicating a successful authentication to the authentication management unit 12. Or, if a user ID with the matching degree thereof being greater than or equal to the predetermined threshold value has not been specified, the feature calculation unit 13 outputs authentication result information indicating an unsuccessful authentication to the authentication management unit 12.

The authentication management unit 12 outputs the authentication result information to the input/output unit 11. The input/output unit 11 transmits the authentication result information to the edge device 2 via the communication network 30 (Step S208). The edge device 2 determines a successful authentication or an unsuccessful authentication on the basis of the authentication result information. The edge device 2 performs a predetermined process on the basis of the successful authentication or the unsuccessful authentication. The predetermined process may be any process.

According to the processing described above, the authentication management device 1 can perform multi-element authentication on the basis of a captured image of a forward-facing face and a captured image showing a motion. In this multi-element authentication, the authentication management device 1 can reduce the number of comparison target users in a short time when using motion feature information first to perform authentication with use of face feature information. Therefore, the amount of time needed for the subsequent authentication processing by means of face feature information can be reduced, and the processing of multiple element authentication can be shortened. Moreover, according to the processing described above, it is possible to highly conveniently perform 1-to-N authentication that does not require input of specific information for specifying a user such as user ID and password.

### <Second Example Embodiment>

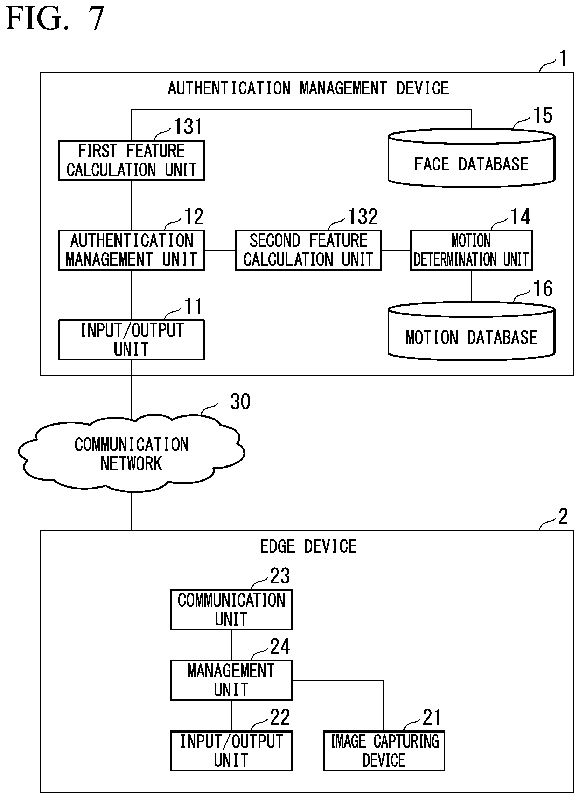

FIG. 7 is a second diagram showing function blocks of an authentication management device and an edge device.

According to the processing described above, the feature calculation unit 13 of the authentication management device 1 calculates both motion feature information and face feature information. However, the authentication management device 1 may include a first feature calculation unit 131 and a second feature calculation unit 132 in place of the feature calculation unit 13. In such a case, the first feature calculation unit 131 performs an authentication process using face feature information on the basis of a captured image of a forward-facing face. Moreover, the second feature calculation unit 132 performs an authentication process using motion feature information of a face included in a motion captured image. Other processes are similar to those of the first example embodiment.

### <Third Example Embodiment>

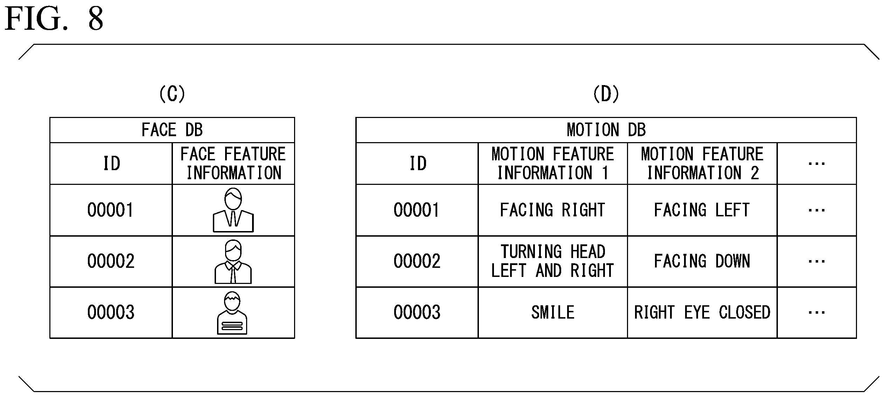

FIG. 8 is a second diagram showing a registration status of a face database and a motion database.

The authentication management device 1 may use a plurality of pieces of facial motion feature information to authenticate whether user's motions and the order thereof match. In such a case, as shown in the portion (D) of FIG. 8, a plurality of motion feature information are registered preliminarily in the motion database 16 related to a user, in association with the ID of the user.

The feature calculation unit 13 or the second feature calculation unit 132 sequentially calculates motion feature information, on the basis of the plurality of captured images. The motion determination unit 14 compares the plurality of pieces of motion feature information calculated on the basis of the captured images and the order thereof against the motion feature information and the order thereof that are recorded preliminarily in the motion database 16, to thereby generate a list of matching user IDs. The feature calculation unit 13 or the first feature calculation unit 131 then acquires the face feature information corresponding to the list of user IDs from the face database 15, and specifies a user ID that matches the feature information of the face shown in the captured images at the matching degree greater than or equal to a threshold value.

According to such a process, the authentication management device 1 can perform authentication on the basis of the feature information of one or more motions registered by the user. The more the user registers feature information of motions, the higher the level of security at which the authentication management device 1 can perform authentication.

### <Fourth Example Embodiment>

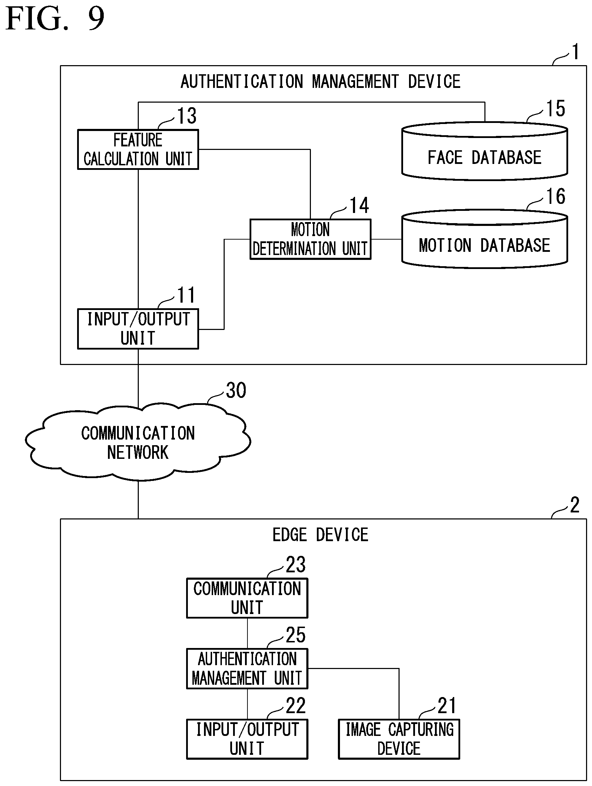

FIG. 9 is a third diagram showing function blocks of an authentication management device and an edge device.

In the first example embodiment, the second example embodiment, and the third example embodiment, the authentication management unit 12 included in the authentication management device 1 performs management whereby a plurality of different authentications are continuously made on the basis of a comparison between a feature of a face imaged in a captured image and a feature of a motion, and pre-stored features of faces of a plurality of persons and features of motions. However, the authentication management unit 25 of the edge device 1 may perform management whereby a plurality of different authentications are continuously made on the basis of a comparison between a feature of a face imaged in a captured image and a feature of a motion, and pre-stored features of faces of a plurality of persons and features of motions.

For example, when registering biometric information, the authentication management unit 25 acquires a plurality of captured images captured by the image capturing device 21. The authentication management unit 25 specifies, among the plurality of captured images, a captured image in which the user is facing forward. The authentication management unit 12 instructs, via the communication unit 23, the feature calculation unit 13 of the authentication management device 1 to extract face feature information of the captured image. The subsequent processes are similar to those described in the first example embodiment.

Moreover, the authentication management unit 25 specifies a captured image in which the user adds a motion to their face. The authentication management unit 25 instructs, via the communication unit 23, the feature calculation unit 13 of the authentication management device 1 to extract motion feature information of the captured image. The subsequent processes are similar to those described in the first example embodiment.

Also in the authentication process, the authentication management unit 25 specifies a captured image indicating a motion, among the captured images captured by the image capturing device 21. The authentication management unit 25 instructs, via the communication unit 23, the feature calculation unit 13 of the authentication management device 1 to extract motion feature information on the basis of the captured image.

The feature calculation unit 13 acquires the captured image in which the user has added a motion to their face. The feature calculation unit 13 calculates motion feature information, on the basis of the captured image. After having calculated the motion feature information, the feature calculation unit 13 outputs the motion feature information to the motion determination unit 14. The motion determination unit 14 specifies user IDs that are recorded in the motion database 16 in association with motion feature information matching the motion feature information calculated by the feature calculation unit 13. The motion determination unit 14 outputs the list of user IDs to the feature calculation unit 13.

The authentication management unit 25 specifies a captured image indicating an image of a forward-facing face, among the captured images included in the authentication request. The authentication management unit 12 instructs, via the communication unit 23, the feature calculation unit 13 of the authentication management device 1 to extract face feature information on the basis of the captured image.

The feature calculation unit 13 calculates face feature information, on the basis of the captured image. The feature calculation unit 13, on the basis of the list of user IDs acquired from the motion determination unit 14, acquires face feature information associated with those user IDs from the face database 15. The feature calculation unit 13 calculates the degree of match between the feature information of the forward-facing face calculated on the basis of the captured image and one or more pieces of face feature information acquired from the face database 15 on the basis of the list of user IDs. The feature calculation unit 13 specifies, as the ID of the authentication target user, a user ID corresponding to the feature information with the matching degree thereof being greater than or equal to a predetermined threshold value and also the highest. If a user ID with the matching degree thereof being greater than or equal to the predetermined threshold value has been specified, the feature calculation unit 13 outputs authentication result information indicating a successful authentication to the authentication management unit 12. Or, if a user ID with the matching degree thereof being greater than or equal to the predetermined threshold value has not been specified, the feature calculation unit 13 outputs authentication result information indicating an unsuccessful authentication to the edge device 2 via the input/output unit 11.

The authentication management unit 25 acquires the authentication result information via the communication unit 23. The authentication management unit 25 of the edge device 2 determines a successful authentication or an unsuccessful authentication on the basis of the authentication result information. The edge device 2 performs a predetermined process on the basis of the successful authentication or the unsuccessful authentication. The predetermined process may be any process.

### <Fifth Example Embodiment>

In the processing described above, at the time of registering biometric information or in the authentication process, the authentication management device 1 may determine the authentication as being unsuccessful if the duration of time between the start of the process and the end of the process reaches or exceeds a predetermined length of time. In such a case, the authentication management unit 12 or the authentication management unit 25 may detect the start of the registration process or the authentication process and start counting by a timer, and may determine the authentication as being unsuccessful if an authentication result cannot be generated or acquired when the duration timed by the timer has reached or exceeded a predetermined length of time.

### <Sixth Example Embodiment>

In the processing described above, the authentication management device 1 uses a captured image captured from the front side of the face to calculate face feature information, and calculates the matching degree of the face feature information to perform authentication. Also, in the processing described above, the authentication management device 1 uses another captured image in which a motion is added to the face to calculate motion feature information, and uses the motion feature information to perform authentication. However, the authentication management device 1 may perform authentication, using the feature information of a face and the feature information of a motion captured in a single captured image. In such a case, the authentication management unit 12 outputs the single captured image to the feature calculation unit 13 (or the first feature calculation unit 131 and the second feature calculation unit 132). The feature calculation unit 13 (or the first feature calculation unit 131 and the second feature calculation unit 132) calculates the feature information of the face and the feature information of the motion captured in the single captured image, and performs the authentication process as in the processing described above, on the basis of both of the pieces of feature information.

### <Seventh Example Embodiment>

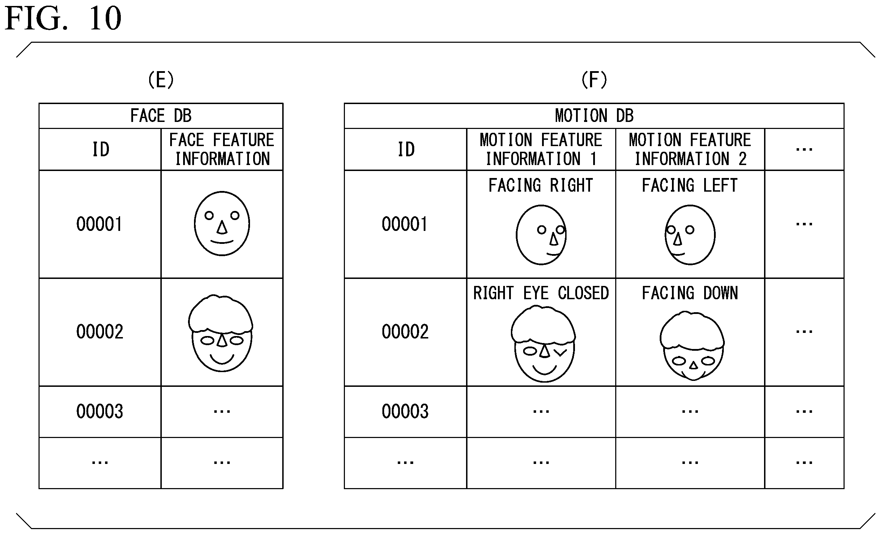

FIG. 10 is a third diagram showing a registration status of a face database and a motion database.

Note that the motion database 16 may preliminarily store a captured image indicating a motion instead of motion feature information and a user ID in association with each other. When performing the authentication process on the basis of motion feature information, the feature information of a facial motion captured in a captured image and the motion feature information on the basis of a pre-stored captured image may be calculated to specify the user ID associated with the captured image from which the matched motion feature information is calculated.

### <Eighth Example Embodiment>

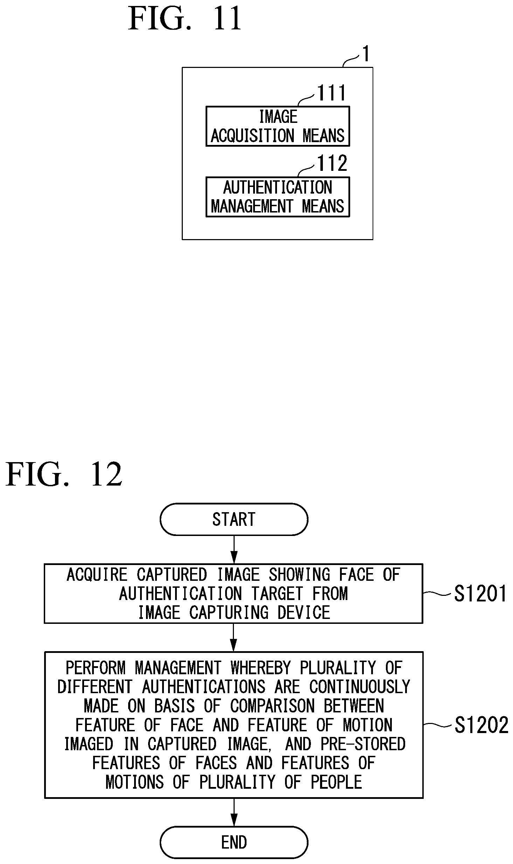

FIG. 11 is a diagram showing an example of a configuration of the authentication management device.

FIG. 12 is a diagram showing a processing flow of the authentication management device shown in FIG. 11.

The authentication management device 1 may include at least an image acquisition means 111 and an authentication management means 112.

The image acquisition means 111 acquires a captured image showing the face of an authentication target from an image capturing device (Step S1201).

The authentication management means 112 performs management whereby a plurality of different authentications are continuously made on the basis of a comparison between the feature of a face imaged in a captured image and the feature of a motion, and pre-stored features of faces of a plurality of persons and features of motions (Step S1202).

Each device described above has a built-in computer system. The process of each processing described above is stored in a computer-readable recording medium in the form of a program, and the processing mentioned above is performed by a computer reading and executing the program. Here, the computer-readable recording medium refers to a magnetic disk, a magnetic optical disk, a CD-ROM, a DVD-ROM, a semiconductor memory, or the like. Moreover, the computer program may be distributed to a computer via a communication line, and the computer having received the distributed program may execute the program.

Also, the program mentioned above may be a program for realizing some of the functions described above. Furthermore, the program may be a so-called difference file (a difference program) which can realize the functions described above in combination with a program already recorded in the computer system.

This application is based upon and claims the benefit of priority from Japanese patent application No. 2020-061055, filed March 30, 2020, the disclosure of which is incorporated herein in its entirety.

### INDUSTRIAL APPLICABILITY

The present invention may be applied to an authentication management device, an authentication management method, and a recording medium.

### Description of Reference Symbols

1 Authentication management device
2 Edge device
11 Input/output unit
12, 25 Authentication management unit
13 Feature calculation unit
14 Motion determination unit
15 Face database
16 Motion database
131 First feature calculation unit
132 Second feature calculation unit

## Claims

1. An authentication management device comprising:
an image acquisition means for acquiring a captured image showing a face of an authentication target from an image capturing device; and
an authentication management means for performing management in which a plurality of different authentications are continuously performed based on a comparison between: a feature of the face and a feature of a motion that are shown in the captured image; and pre-stored features of faces of a plurality of persons and features of motions thereof.

2. The authentication management device according to claim 1,
wherein the image acquisition means acquires a plurality of the captured images consecutively from the captured images, and
the authentication management means performs the management in which the plurality of different authentications are continuously performed, the authentications comprising: face element authentication for performing authentication to specify a person shown in the captured image among the plurality of persons, based on a degree of match between face feature information shown in any of the plurality of captured images and pre-stored face feature information of the plurality of persons; and motion element authentication for performing authentication to specify the person shown in the captured image among the plurality of persons, based on whether or not a facial motion shown in the captured image matches any of pre-stored motions of the plurality of persons.

3. The authentication management device according to claim 1 or 2, wherein the authentication management means determines authentication as being unsuccessful when the plurality of different authentications do not succeed within a predetermined period of time.

4. The authentication management device according to any one of claims 1 to 3, wherein the authentication management means performs the management in which the plurality of different authentications are continuously performed, using a plurality of captured images acquired consecutively from the captured image.

5. The authentication management device according to any one of claims 1 to 3, wherein the authentication management means performs the management in which the plurality of different authentications are continuously performed, using a single captured image acquired from the captured image.

6. An authentication management method comprising:
acquiring a captured image showing a face of an authentication target from an image capturing device; and
performing management in which a plurality of different authentications are continuously performed based on a comparison between: a feature of the face and a feature of a motion that are shown in the captured image; and pre-stored features of faces of a plurality of persons and features of motions thereof.

7. A recording medium having stored therein a program that causes a computer of an authentication management device to execute:
acquiring a captured image showing a face of an authentication target from an image capturing device; and
performing management in which a plurality of different authentications are continuously performed based on a comparison between: a feature of the face and a feature of a motion that are shown in the captured image; and pre-stored features of faces of a plurality of persons and features of motions thereof.
